# EUROPEAN PATENT APPLICATION

(11) **EP 4 723 000 A1**
(43) Date of publication of application: **08.04.2026**
(21) Application number: 24819035.7
(22) Date of filing: 16.04.2024
(51) Int. Cl.: G06Q 10/02

(54) **RESERVATION MANAGEMENT METHOD, RESERVATION MANAGEMENT DEVICE, AND RESERVATION MANAGEMENT PROGRAM**

(30) Priority: 05.06.2023 JP 2023092038
(71) Applicant: Panasonic Intellectual Property Management Co., Ltd., Kadoma-shi, Osaka 571-0057 (JP)
(72) Inventor: KATO, Ryo, Kadoma-shi, Osaka 571-8501 (JP); KITA, Atsuyoshi, Kadoma-shi, Osaka 571-8501 (JP); YAMAGUCHI, Takahiro, Kadoma-shi, Osaka 571-8501 (JP)
(74) Representative: Grünecker Patent- und Rechtsanwälte PartG mbB
(86) International application number: PCT/JP2024/015195
(87) International publication number: WO 2024/252797

(57) **Abstract**

A reservation management method according to the present disclosure includes a first step and a second step. The first step is a step of receiving information about a user. The second step includes determining, based on the received information, whether an electric vehicle of the user is an emergency vehicle. The second step includes setting a group of first slots from among multiple slots by one of methods, the multiple slots each being defined by a charging spot and a time slot and each allowing a charging station to provide a charging service, the methods being different depending on whether or not the electric vehicle of the user is an emergency vehicle. The second step includes displaying the group of first slots to be reservable by the user.

## Description

### TECHNICAL FIELD

The present disclosure relates to a reservation management method, a reservation management device, and a reservation management program.

### BACKGROUND ART

There is a case that charging stations for charging electric vehicles such as electric cars and plug-in hybrid vehicles are installed in public spaces. As a method of using one or more charging stations provided in a public space, a method is conceivable, in which a user reserves a slot defined by a charging spot and a time slot, and the user charges an electric vehicle in the reserved slot (See, for example, Patent Document 1).

### CITATION LIST

### Patent Literature

Patent Document 1: JP 2018-49447 A

### SUMMARY OF INVENTION

### PROBLEM TO BE SOLVED BY THE INVENTION

There is a case that an electric vehicle is used as an emergency vehicle such as an ambulance or a fire truck. To ensure that such emergency vehicles can carry out emergency duties without hindrance at any situation, it is desirable that the emergency vehicles can charge at any of the charging stations installed in a region in an optional time slot.

An object of the present disclosure is to provide a reservation management method, a reservation management device, and a reservation management program that enable an emergency vehicle to charge in an optional time slot.

### MEANS FOR SOLVING PROBLEM

A reservation management method according to the present disclosure includes a first step and a second step. The first step is a step of receiving information about a user. The second step includes determining, based on the received information, whether an electric vehicle of the user is an emergency vehicle. The second step includes setting a group of first slots from among multiple slots by one of methods, the multiple slots each being defined by a charging spot and a time slot and each allowing a charging station to provide a charging service, the methods being different depending on whether or not the electric vehicle of the user is an emergency vehicle. The second step includes displaying the group of first slots to be reservable by the user.

### EFFECT OF THE INVENTION

According to the present disclosure, it is possible to provide a reservation management method, a reservation management device, and a reservation management program that enable an emergency vehicle to charge in an optional time slot.

### BRIEF DESCRIPTION OF DRAWINGS

FIG. 1 is a schematic diagram illustrating an example of an overall configuration of a system in which a reservation management device according to a first embodiment is used;
FIG. 2 is a schematic diagram illustrating another example of the overall configuration of the system in which the reservation management device according to the first embodiment is used;
FIG. 3 is a view illustrating an example of a reservation status of slots;
FIG. 4 is a view illustrating an example of a screen displayed to a user of an emergency vehicle in the reservation status illustrated in FIG. 3;
FIG. 5 is a view illustrating an example of a screen displayed to a user of a general vehicle in the reservation status illustrated in FIG. 3;
FIG. 6 is a diagram illustrating an example of a configuration of the reservation management device according to the first embodiment;
FIG. 7 is a diagram illustrating an example of a configuration of a charging station according to the first embodiment;
FIG. 8 is a diagram illustrating an example of a functional configuration of the reservation management device according to the first embodiment;
FIG. 9 is a flowchart illustrating an example of an operation of reservation management by the reservation management device according to the first embodiment;
FIG. 10 is a diagram illustrating a method of calculating vacant slots according to a first modification of the first embodiment;
FIG. 11 is a flowchart illustrating an example of an operation of a reservation management device according to a second embodiment;
FIG. 12 is a diagram illustrating an example of a functional configuration of a reservation management device according to a third embodiment;
FIG. 13 is a diagram illustrating a specific example of an SBOM according to the third embodiment;
FIG. 14 is a diagram illustrating an example of a configuration of a vulnerability information DB according to the third embodiment;
FIG. 15 is a flowchart illustrating an example of an operation of calculating a safety score by the reservation management device according to the third embodiment;
FIG. 16 is a flowchart illustrating an example of an operation of reservation management by the reservation management device according to the third embodiment;
FIG. 17 is a view illustrating an example of a reservation status of slots;
FIG. 18 is a view illustrating an example of a screen displayed to a user of an emergency vehicle in the reservation status illustrated in FIG. 17;
FIG. 19 is a view illustrating an example of a screen displayed to a user of a general vehicle in the reservation status illustrated in FIG. 17; and
FIG. 20 is a view illustrating another example of a screen displayed to a user of a general vehicle in the reservation status illustrated in FIG. 17.

### DESCRIPTION OF EMBODIMENTS

Hereinafter, embodiments of the present disclosure will be described in detail with reference to the drawings as appropriate. However, unnecessarily detailed description may be omitted. Note that the accompanying drawings and the following description are provided for those skilled in the art to fully understand the present disclosure, and are not intended to limit the subject matter described in the claims.

### (First Embodiment)

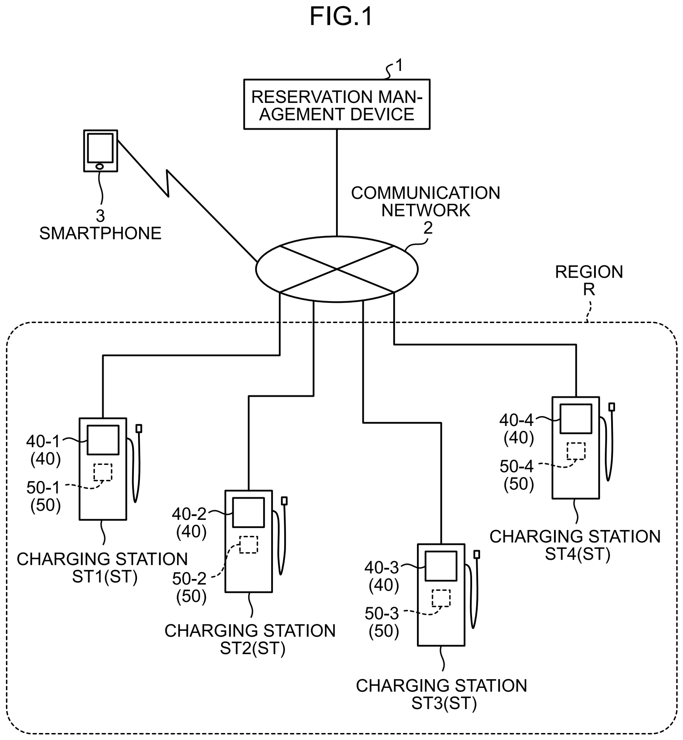

FIG. 1 is a schematic diagram illustrating an example of an overall configuration of a system in which a reservation management device 1 according to a first embodiment is used.

As illustrated in FIG. 1, a plurality of charging stations ST is provided in a certain region R. Here, as one example, the charging stations ST are four charging stations ST1 to ST4.

The reservation management device 1 and the four charging stations ST1 to ST4 are connected via a communication network 2. The reservation management device 1 and the four charging stations ST1 to ST4 can communicate with each other via the communication network 2.

Note that a type of the communication network 2 is not limited to a specific type. The communication network 2 may be the one using wired communication paths, wireless communication links, or the both. The communication network 2 may the one using the Internet.

Each charging station ST includes a charging station terminal 40 and a charger 50. In the example illustrated in FIG. 1, the charging station ST1 includes a charging station terminal 40-1 and a charger 50-1. The charging station ST2 includes a charging station terminal 40-2 and a charger 50-2. The charging station ST3 includes a charging station terminal 40-3 and a charger 50-3. The charging station ST4 includes a charging station terminal 40-4 and a charger 50-4.

The charger 50 includes a connector that can be connected to an electric vehicle. While the connector is connected to the electric vehicle, the charger 50 converts power supplied from a power supply, which is not illustrated in the drawing, into power that can charge the electric vehicle, and supplies the converted power to the electric vehicle via the connector. Note that the charger 50 may be configured to wirelessly charge the electric vehicle. Then, the charger 50 may not necessarily be provided with a connector for power supply.

The charging station terminal 40 is communicably connected to the reservation management device 1 via the communication network 2. The charging station terminal 40 executes control of the whole charging stations ST including control of the charger 50, calculation of a bill according to an amount of power used for charging, and the like. The charging station terminal 40 is configured such that the user can perform an operation for slot reservation.

The reservation management device 1 executes reservation management for multiple slots that allow the charging stations ST1 to ST4 to provide a charging service. The slots are defined by time slots and charging spots. When there are one or more reservable slots, the reservation management device 1 displays the one or more slots so that the user can select. The user selects a desired slot from among the one or more slots. The reservation management device 1 allocates the selected slot to the user, and thereby the selected slot is reserved by the user.

A single charger 50 corresponds to a single charging spot. In the example illustrated in FIG. 1, a single charging station ST includes a single charger 50. Therefore, a single charging station ST may be regarded as a single charging spot.

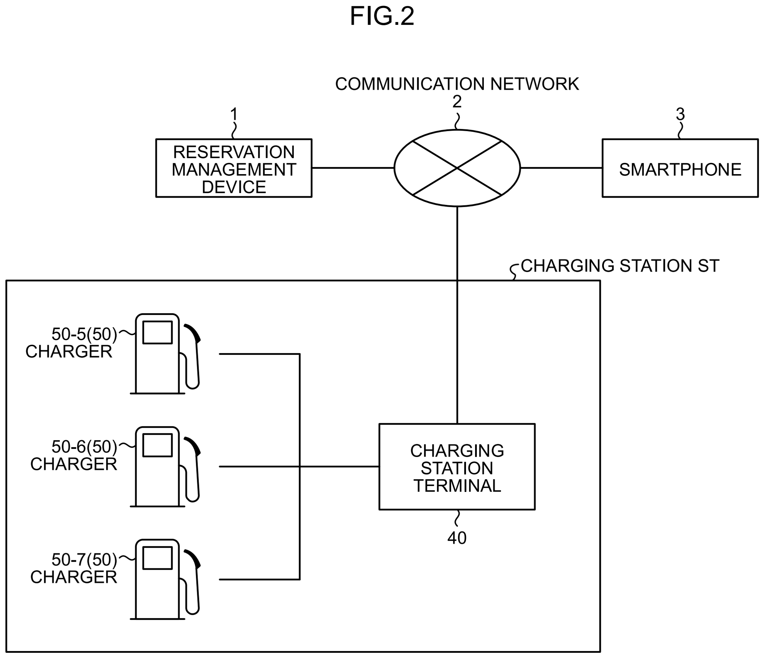

Note that one charging station ST may include a plurality of charging spots. FIG. 2 is a schematic diagram illustrating another example of the overall configuration of the system in which the reservation management device 1 according to the first embodiment is used.

In the example illustrated in FIG. 2, the charging station ST includes one charging station terminal 40 and three chargers 50-5, 50-6, and 50-7. The three chargers 50-5, 50-6, and 50-7 are connected to the charging station terminal 40. The charging station terminal 40 is communicably connected to the reservation management device 1 via the communication network 2.

The charging station terminal 40 executes control of the whole charging stations ST including the three chargers 50-5, 50-6, and 50-7. The charging station terminal 40 is configured so that the user can perform an operation for reserving a slot.

The three chargers 50-5, 50-6, and 50-7 can independently charge different electric vehicles. Thus, the charging station ST can charge up to three electric vehicles in parallel. When the charging station ST is configured as such, the charging station ST is regarded as including three charging spots.

The number of chargers 50 connected to the charging station terminal 40 is not limited to three. The number of chargers 50 connected to the charging station terminal 40 may be other than three.

As described above, each charging station ST may include a plurality of chargers 50. When one charging station ST includes a plurality of chargers 50, the charging station ST is regarded as including charging spots by the number corresponding to the number of chargers 50 provided in the charging station ST.

In the first embodiment, for simplifying description, it is assumed that each charging station ST includes one charger 50 and can charge only one electric vehicle at once in accordance with the example illustrated in FIG. 1. Thus, one charging station ST is synonymous with one charging spot. Therefore, each slot is defined by a combination of a time slot and a charging station ST. Note that the first embodiment, modifications of the first embodiment, and the subsequent embodiments are also applicable to a case where one charging station ST includes two or more charging spots.

The user can access the reservation management device 1 from the charging station ST, more precisely, from the charging station terminal 40 provided in the charging station ST, and perform an operation for reservation. The reservation management device 1 can display one or more reservable slots on the charging station terminal 40, and can acquire input of a desired slot from the user via the charging station terminal 40.

The user can access the reservation management device 1 from an optional information processing terminal such as a smartphone 3 and perform an operation for reservation. The reservation management device 1 can display one or more reservable slots on the smartphone 3, and can acquire input of a desired slot from the user via the smartphone 3.

It is desirable that an emergency vehicle that is a vehicle for emergency service such as an ambulance or a fire truck can charge at any one of the four charging stations ST1 to ST4 provided in the region R at any time. Therefore, the reservation management device 1 sets a group of slots to be displayed as reservable slots by one of methods different depending on whether the electric vehicle of the user is an emergency vehicle. Hereinafter, a vehicle that is not an emergency vehicle may be referred to as a general vehicle.

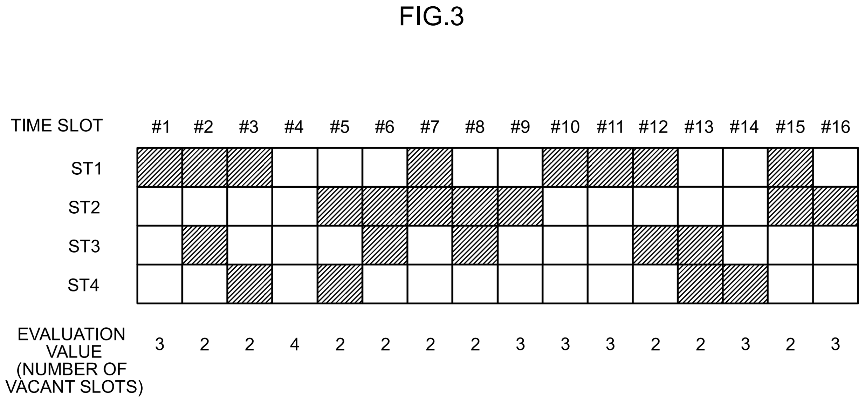

A specific example of a method of displaying reservable slots will be described with reference to FIGS. 3 to 5.

FIG. 3 is a view illustrating an example of a reservation status of slots. Time slots #1 to #16 are sections obtained by dividing a period of time during which the charging stations ST can provide the charging service. The time slots #1 to #16 may have the common length but may have different lengths.

As described above, each of the four charging stations ST1 to ST4 is regarded as one charging spot. Therefore, a total of 64 slots are defined as the slots that allow the charging stations ST1 to ST4 to provide the charging service by the 16 time slots #1 to #16 and the four charging stations ST1 to ST4. The 64 rectangles depicted in FIG. 3 are the 64 slots that allow the charging stations ST to provide the charging service.

Rectangles with diagonal hatching indicate slots that have been reserved for emergency vehicle or for general vehicle. Rectangles with no diagonal hatching indicate unreserved slots, namely, vacant slots.

The reservation management device 1 calculates an evaluation value for each time slot related to the number of vacant slots for each time slot. Here, as one example, the number of vacant slots for each time slot is set as the evaluation value. For time slots each of whose evaluation value exceeds K, the reservation management device 1 sets all vacant slots as available slots for a user of the emergency vehicle and a user of the general vehicle. For time slots each of whose evaluation value is less than K, the reservation management device 1 sets all vacant slots as available slots for the user of the emergency vehicle, and sets all slots as unavailable slots for the user of the general vehicle. K is a real number equal to or larger than 1 and smaller than the number of charging spots. Hereinafter, for simplifying description, it is assumed that K is an integer.

Note that, for time slots each of whose evaluation value is equal to K, the reservation management device 1 may display available slots by a method similar to that when the evaluation value exceeds K, or may display available slots by a method similar to that when the evaluation value is less than K. In the first embodiment, as one example, for time slots each of whose evaluation value is equal to K, available slots are displayed by a method similar to that when the evaluation value is less than K.

In the example of FIG. 3, a value of 2 or more and less than 4 is set as K. When K is "2", the evaluation value, namely, the number of vacant slots exceeds K in the time slot #1, the time slot #4, the time slots #9 to #11, the time slot #14, and the time slot #16. In the time slots #2 to #3, #5 to #8, #12, #13, and #15, the evaluation value is K or less.

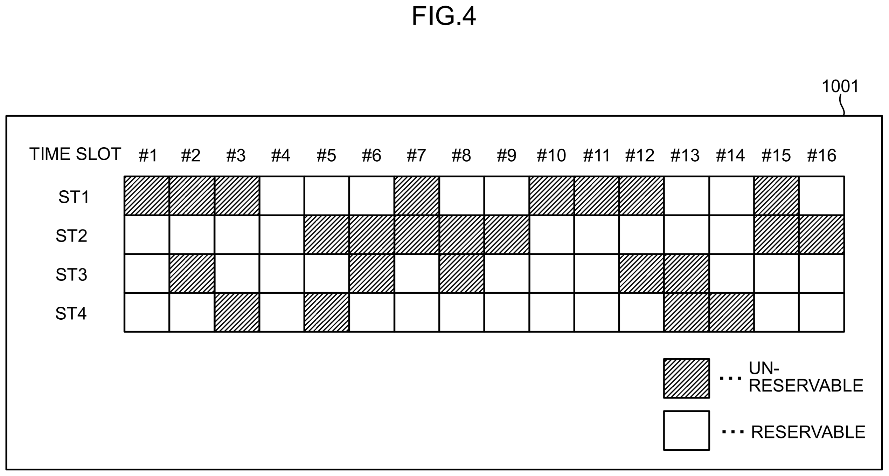

FIG. 4 is a view illustrating an example of a screen displayed to the user of the emergency vehicle in the reservation status illustrated in FIG. 3. A screen 1001 illustrated in the drawing is displayed on a terminal operated by the user of the emergency vehicle, for example, on the smartphone 3 or the charging station terminal 40. On the screen 1001, all vacant slots in all time slots are displayed as reservable slots, and all reserved slots in all time slots are displayed as unreservable slots. Therefore, the user of the emergency vehicle can select a slot for charging the emergency vehicle from among all vacant slots in all time slots.

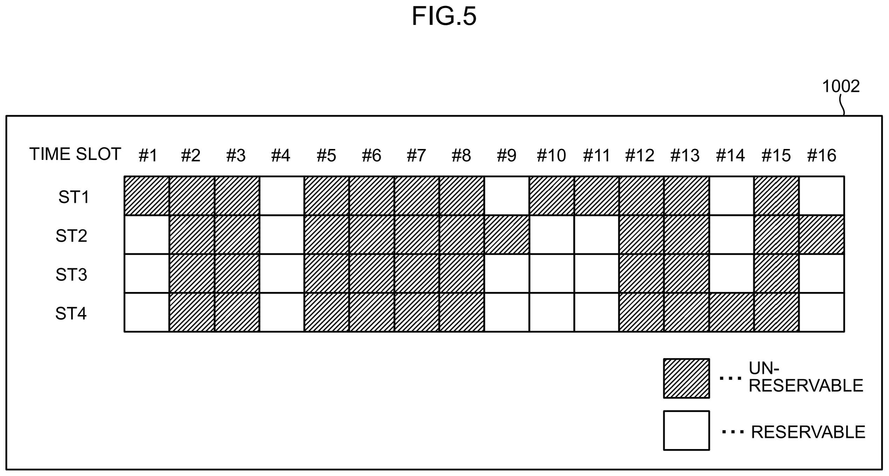

FIG. 5 is a view illustrating an example of a screen displayed to the user of the general vehicle in the reservation status illustrated in FIG. 3. A screen 1002 illustrated in the drawing is displayed on a terminal operated by the user of the general vehicle, for example, on the smartphone 3 or the charging station terminal 40. In the time slot #1, the time slot #4, the time slots #9 to #11, the time slot #14, and the time slot #16 on the screen 1002, each of whose evaluation value exceeds K (here, K is "2"), all vacant slots are displayed as reservable slots and all reserved slots are displayed as unreservable slots. In the time slots #2, #3, #5 to #8, #12, #13, and #15 on the screen 1002, each of whose evaluation value is K or less, all slots are displayed as unreservable slots. Therefore, the user of the general vehicle can select a slot for charging only from among the vacant slots in the time slots each of whose number of vacant slots exceeds K.

As described above, the vacant slots in the time slots each of whose number of vacant slots is K or less are unreservable for the user of the general vehicle. Therefore, it is possible to leave at least K slots dedicated for emergency vehicles in any time slot. As a result, the user of the emergency vehicle can immediately make a reservation in any time slot at which charging is required and charge the emergency vehicle. Thus, the emergency vehicle can charge in any time slot.

Next, details of a configuration of each device for implementing the above-described operation will be described.

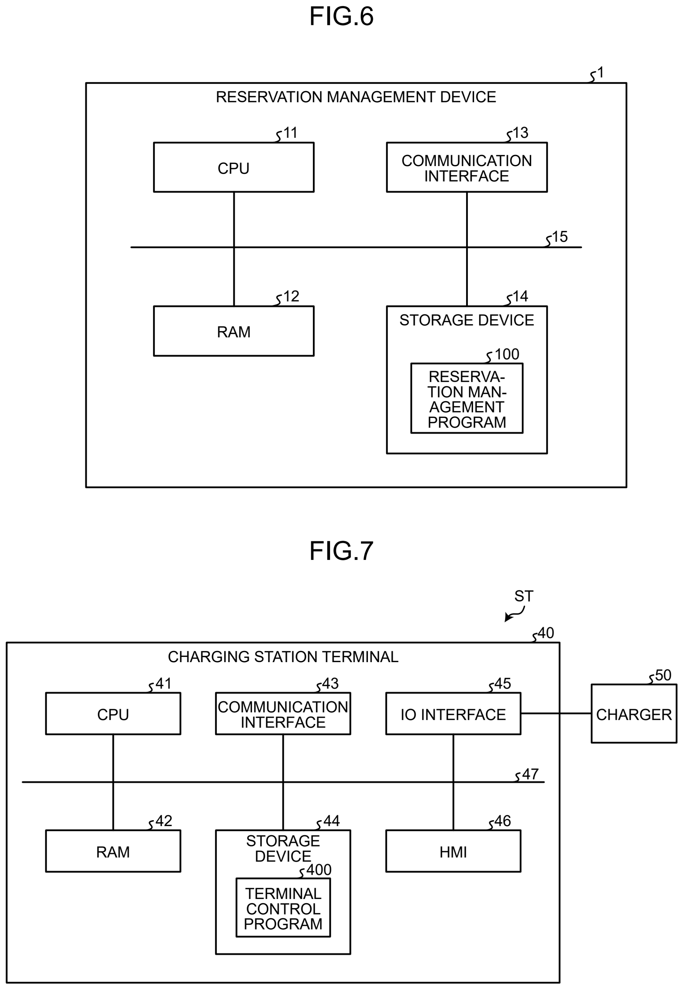

FIG. 6 is a diagram illustrating an example of a configuration of the reservation management device 1 according to the first embodiment.

The reservation management device 1 includes a central processing unit (CPU) 11, a random access memory (RAM) 12, a communication interface 13, a storage device 14, and a bus 15. The CPU 11, the RAM 12, the communication interface 13, and the storage device 14 are electrically connected to the bus 15.

The communication interface 13 is an adapter for communicating between the reservation management device 1 and an external device via the communication network 2. According to the example illustrated in FIG. 1, charging station terminals 40-1 to 40-4 and the smartphone 3 are connected to the communication interface 13 via the communication network 2. Thus, the charging station terminals 40-1 to 40-4 and the smartphone 3 correspond to the external device connected to the communication interface 13.

The CPU 11 is an arithmetic device capable of executing various types of processing based on a computer program.

The RAM 12 is a memory that provides the CPU 11 with a function as a work memory, a buffer memory, or a cache memory.

The storage device 14 is a storage device capable of storing data in a nonvolatile manner. Optional types of non-volatile storage devices including a hard disk drive (HDD), a solid state drive (SSD), and the like can be used as the storage device 14.

A reservation management program 100 is stored in advance in the storage device 14. The CPU 11 loads the reservation management program 100 from the storage device 14 to the RAM 12. Upon receiving an instruction related to reservation from the smartphone 3 or the charging station terminal 40, the CPU 11 executes various types of processing as the reservation management device 1 according to the reservation management program 100 loaded to the RAM 12.

FIG. 7 is a diagram illustrating an example of a configuration of the charging station ST according to the first embodiment.

The charging station ST includes the charging station terminal 40 and the charger 50.

As described above, the charging station terminal 40 executes control of the whole charging stations ST including control of the charger 50, calculation of a bill according to an amount of power used for charging, and the like. The charging station terminal 40 is configured such that the user can perform an operation for slot reservation. The charging station terminal 40 can display reservable slots to the user in response to an instruction from the reservation management device 1, or can receive input of a desired slot from the user and transmit the input to the reservation management device 1.

The charging station terminal 40 includes a CPU 41, a RAM 42, a communication interface 43, a storage device 44, an input-output (IO) interface 45, a human machine interface (HMI) 46, and a bus 47. The CPU 41, the RAM 42, the communication interface 43, the storage device 44, the IO interface 45, and the HMI 46 are electrically connected to the bus 47.

The communication interface 43 is an adapter for communication between the charging station terminal 40 and an external device via the communication network 2. According to the example illustrated in FIG. 1, the reservation management device 1 is connected to the communication interface 43 via the communication network 2. Thus, the reservation management device 1 corresponds to an external device connected to the communication interface 43.

The IO interface 45 is an adapter for transmitting and receiving signals to and from the charger 50. The charging station terminal 40 controls the charger 50 by transmitting signals to the charger 50 via the IO interface 45. The charging station terminal 40 acquires an operation status of the charger 50 via the IO interface 45 to calculate an amount of power used for charging.

The HMI 46 displays a screen to the user and receives an operation from the user. The HMI 46 is, for example, a touch panel display. For example, the screen 1001 illustrated in FIG. 4 and the screen 1002 illustrated in FIG. 5 are displayed on the HMI 46. For example, an input by the user for selecting a slot is executed via the HMI 46. Note that the HMI 46 is not limited to a touch panel display as long as a screen can be displayed to the user and an operation can be received from the user.

The CPU 41 is an arithmetic device capable of executing various types of processing based on a computer program.

The RAM 42 is a memory that provides the CPU 41 with a function as a work memory, a buffer memory, or a cache memory.

The storage device 44 is a storage device capable of storing data in a nonvolatile manner. Optional types of non-volatile storage devices including a hard disk drive (HDD), a solid state drive (SSD), and the like can be applied as the storage device 44.

A terminal control program 400 is stored in advance in the storage device 44. The CPU 41 loads the terminal control program 400 from the storage device 44 to the RAM 42. Then, the CPU 41 executes various types of processing as the charging station terminal 40 according to the terminal control program 400 loaded to the RAM 42.

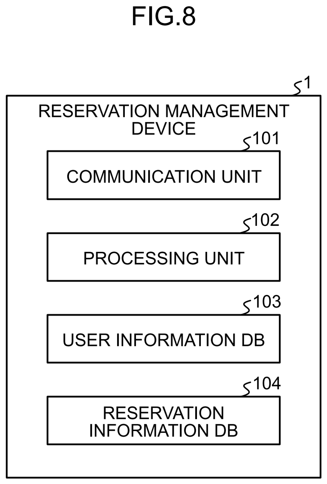

FIG. 8 is a diagram illustrating an example of a functional configuration of the reservation management device 1 according to the first embodiment.

The reservation management device 1 functions as a communication unit 101, a processing unit 102, a user information database (DB) 103, and a reservation information database (DB) 104.

A function of the communication unit 101 is implemented by, for example, the communication interface 13 or the CPU 11. Functions of the processing unit 102, the user information DB 103, and the reservation information DB 104 are implemented by, for example, the CPU 11 executing the reservation management program 100. One or both of the user information DB 103 and the reservation information DB 104 may be implemented by the CPU 11 based on a program different from the reservation management program 100. One or both of the user information DB 103 and the reservation information DB 104 may be implemented by an information processing device provided outside the reservation management device 1.

The communication unit 101 is an example of a reception unit.

The user information DB 103 is a database in which account information, which is one example of information about a user who can use the charging station ST, is recorded for each user. The account information includes, for example, a login name and a login password. In the user information DB 103, a vehicle type indicating whether the electric vehicle of the user is an emergency vehicle or a general vehicle is recorded in association with each piece of account information.

The reservation information DB 104 is a database in which presence or absence of reservation and a user who made the reservation are recorded for each slot of the charging stations ST1 to ST4.

The processing unit 102 can look up the user information DB 103 and the reservation information DB 104. The processing unit 102 executes reservation management by using the user information DB 103 and the reservation information DB 104. Further details of the processing unit 102 will become apparent in description of the operation.

Next, an operation of the reservation management device 1 will be described.

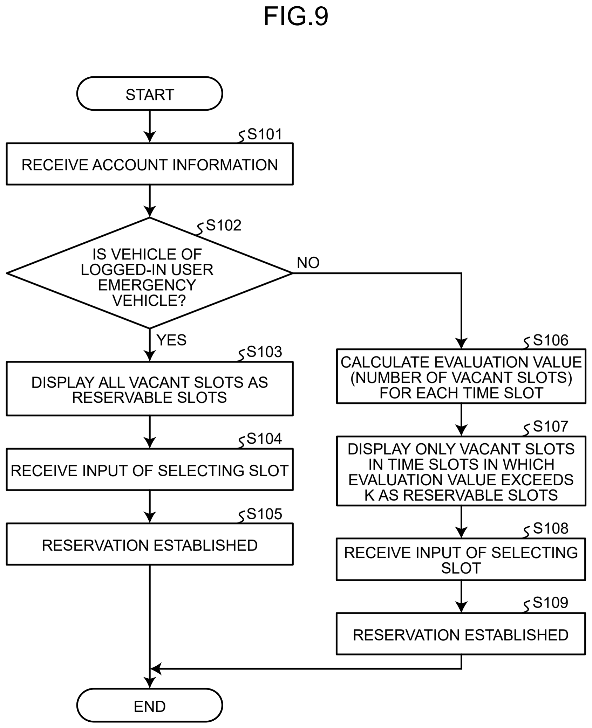

FIG. 9 is a flowchart illustrating an example of an operation of reservation management by the reservation management device 1 according to the first embodiment.

When accessing the reservation management device 1 from an information processing terminal such as the smartphone 3 or from the charging station terminal 40 of a certain charging station ST, the user performs a login operation. In the login operation, the user inputs account information. Hereinafter, the information processing terminal such as the smartphone 3 or the charging station terminal 40 operated by the user will be referred to as a user terminal.

The account information input to the user terminal is transmitted to the reservation management device 1 via the communication network 2. When the communication unit 101 receives the account information (S101), the processing unit 102 determines whether a vehicle of the logged-in user, namely, a vehicle of the user who input the account information is an emergency vehicle, based on the received account information (S102).

The account information of each user recorded in the user information DB 103A is linked with a vehicle type. In S102, for example, the processing unit 102 searches for the user information DB 103 by using the received account information as a search key. Then, the processing unit 102 determines whether the vehicle of the logged-in user is an emergency vehicle by looking up a vehicle type obtained by the search. When the vehicle type obtained by the search indicates an emergency vehicle, the processing unit 102 determines that the vehicle of the logged-in user is an emergency vehicle. When the vehicle type obtained by the search indicates a general vehicle, the processing unit 102 determines that the vehicle of the logged-in user is not an emergency vehicle.

When the vehicle of the logged-in user is an emergency vehicle (S102: Yes), the processing unit 102 displays all vacant slots as reservable slots (S103). In other words, the processing unit 102 displays, on the user terminal, a screen in which all unreserved slots of the charging stations ST1 to ST4 are displayed as reservable slots and all reserved slots of the charging stations ST1 to ST4 are displayed as unreservable slots.

The logged-in user executes, by the user terminal, an input of selecting a desired slot from among all slots displayed as reservable slots. The logged-in user is prohibited from selecting a slot that is not displayed as a reservable slot. An input for selecting a slot from among reservable slots is transmitted from the user terminal to the reservation management device 1 via the communication network 2.

When the communication unit 101 receives the input of selecting a slot (S104), a reservation is established (S105). Specifically, the processing unit 102 operates the reservation information DB 104 and allocates the selected slot indicated by the input to the logged-in user. In S105, the operation of reservation management ends.

When the vehicle of the logged-in user is not an emergency vehicle (S102: No), the processing unit 102 calculates an evaluation value for each time slot, namely, the number of vacant slots for each time slots (S106). The processing unit 102 displays only vacant slots in time slots, each of whose evaluation value exceeds K, as reservable slots (S107). In other words, the processing unit 102 displays, on the user terminal, a screen in which, for time slots each of whose evaluation value exceeds K, all unreserved slots are displayed as reservable slots and all reserved slots are displayed as unreservable slots, and, for time slots each of whose number of vacant slots is K or less, all slots are displayed as unreservable slots.

The logged-in user executes, by the user terminal, an input of selecting a desired slot from among all slots displayed as reservable slots. The logged-in user is prohibited from selecting a slot that is not displayed as a reservable slot. An input for selecting a slot from among reservable slots is transmitted from the user terminal to the reservation management device 1 via the communication network 2.

When the communication unit 101 receives the input of selecting a slot (S108), a reservation is established (S109). Specifically, the processing unit 102 operates the reservation information DB 104 and allocates the selected slot to the logged-in user. In S109, the operation of reservation management ends.

In the series of operations illustrated in FIG. 9, S101 is an example of a first step. S102, S103, S106, and S107 are an example of a second step.

In the above description, when the electric vehicle of the user is an emergency vehicle, the processing unit 102 displays all vacant slots for all time slots as slots reservable by the user. The processing unit 102 may display some of vacant slots for the time slots as slots reservable by the user of the emergency vehicle.

In the above description, when the vehicle of the user is not an emergency vehicle, all vacant slots are displayed as slots reservable by the user, for time slots each of whose evaluation value exceeds a threshold. The processing unit 102 may display some of vacant slots for the time slots each of whose evaluation value exceeds the threshold as slots reservable by the user of the general vehicle.

As described above, according to the first embodiment, when the electric vehicle of the user is an emergency vehicle, the processing unit 102 sets vacant slots for all time slots as slots reservable by the user. When the vehicle of the user is not an emergency vehicle, the vacant slots for the time slots, each of whose evaluation value exceeds the threshold, are set as slots reservable by the user, and vacant slots for the time slots, each of whose evaluation value is less than the threshold, are not set as slots reservable by the user.

Therefore, the emergency vehicle can charge in any time slot.

### (First Modification of First Embodiment)

As a first modification of the first embodiment, another example of a method of calculating an evaluation value will be described.

For example, a case is assumed such that an electric vehicle of a user is not immediately moved from a charging spot even when a time slot of a slot reserved by the user ends. In such a case, even when a time slot reserved for charging the emergency vehicle starts, there is a possibility that charging of the emergency vehicle cannot be started since the user who reserved the immediately previous slot does not immediately move the vehicle.

Therefore, in the first modification of the first embodiment, for each time slot, when a slot immediately preceding a vacant slot has been reserved, the processing unit 102 reduces an evaluation value as compared to when a slot immediately preceding a vacant slot has been unreserved. In other words, the processing unit 102 estimates the evaluation value related to the number of vacant slots to be smaller than the actual number of vacant slots.

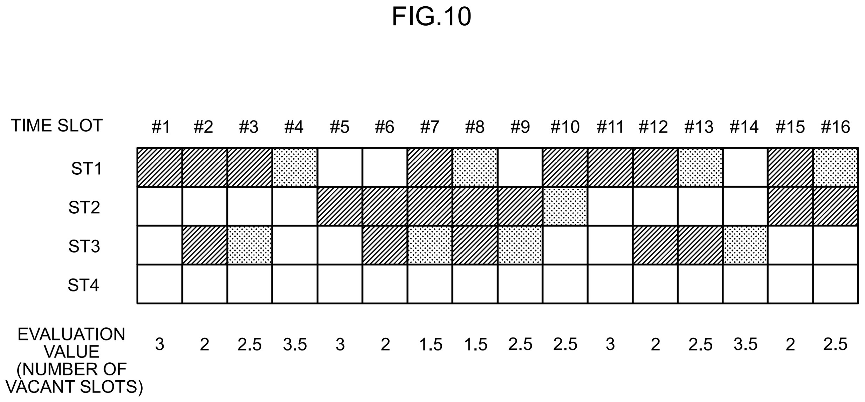

FIG. 10 is a diagram illustrating a method of calculating vacant slots according to the first modification of the first embodiment. The drawing illustrates a reservation status for 64 slots that allow the charging station ST to provide the charging service. It is assumed that the time slots #1 to #16 are sequentially continuous in time. Rectangles with diagonal hatching indicate slots reserved for emergency vehicle or for general vehicle. Rectangles with dot hatching indicate vacant slots for which an immediately previous slot is reserved. Outlined rectangles indicate vacant slots for which an immediately previous slot is unreserved.

The processing unit 102 calculates an evaluation value for each time slot by adding "0" for the reserved slots, "1" for the vacant slots for which the immediately previous slot is unreserved, and "0.5" for the vacant slots for which the immediately previous slot is reserved, for each time slot. Therefore, when a slot immediately preceding a vacant slot has been reserved, the evaluation value can be reduced as compared to when a slot immediately preceding a vacant slot has been unreserved.

For example, in the time slot #1, a slot of the charging station ST1 is reserved, and slots of the charging stations ST2 to ST4 are vacant slots for which the immediately previous slot is unreserved. Therefore, the processing unit 102 acquires "3" as the evaluation value of the time slot #1 by adding "0", "1", "1", and "1".

For example, in the time slot #3, a slot of the charging station ST1 is reserved, a slot of the charging station ST2 is a vacant slot for which the immediately previous slot is unreserved, a slot of the charging station ST3 is a vacant slot for which the immediately previous slot is reserved, and a slot of the charging station ST4 is a vacant slot for which the immediately previous slot is unreserved. Therefore, the processing unit 102 acquires "2.5" as the evaluation value of the time slot #1 by adding "0", "1", "0.5", and "1".

Since matters other than the method of calculating the evaluation value are the same as those in the first embodiment, description of the matters other than the method of calculating the evaluation value is omitted.

As described above, in the processing of calculating the evaluation value for each time slot, when a slot immediately preceding a vacant slot has been reserved, the evaluation value may be reduced as compared to when a slot immediately preceding a vacant slot has been unreserved.

With the above configuration, when the slot of the immediately previous time slot is reserved, even when the number of vacant slots exceeds the threshold (for example, K), reservation by the user of the general vehicle is prohibited as long as the number of vacant slots does not have a margin according to the number of slots for which the immediately previous slot is reserved. Therefore, it is possible to prevent a situation that charging of the emergency vehicle cannot be started for the reason that the user who reserved the immediately previous slot does not immediately move the vehicle.

### (Second Modification of First Embodiment)

As a second modification of the first embodiment, still another example of a method of calculating an evaluation value will be described.

When slots are reserved for charging the emergency vehicle, the processing unit 102 may acquire an evaluation value by adding the number of slots reserved for charging emergency vehicles from the number of vacant slots for each time slot.

The processing unit 102 determines whether to set a vacant slot as a slot reservable for charging emergency vehicles based on a comparison between the evaluation value obtained by the above calculation method and the threshold (for example, K). With this determination, it is possible to increase the number of slots for charging general vehicles while securing the slots for charging emergency vehicles.

### (Second Embodiment)

In a second embodiment, an example that a slot reservable by a user of a general vehicle is further narrowed down and displayed will be described.

A reservation management device according to the second embodiment is referred to as a reservation management device 1a. A processing unit according to the second embodiment is referred to as a processing unit 102a. In the second embodiment, matters different from those in the first embodiment will be described. Matters same as those of the first embodiment will not be described or will be briefly described.

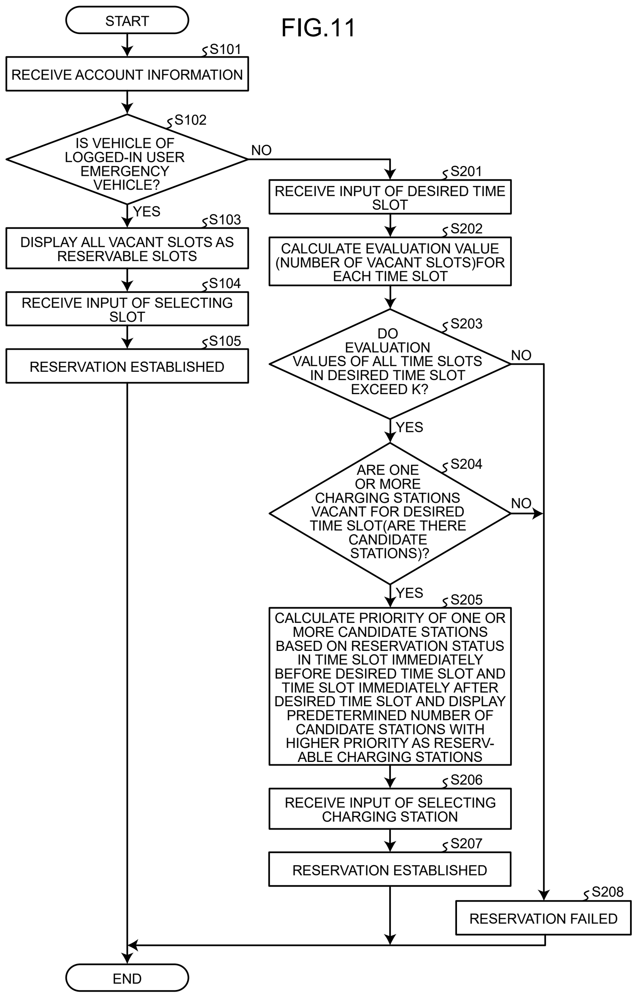

FIG. 11 is a flowchart illustrating an example of an operation of the reservation management device 1a according to the second embodiment.

In S101 to S105, the reservation management device 1a executes the same processing as the reservation management device 1 according to the first embodiment.

When the vehicle of the logged-in user is the emergency vehicle (S102: Yes), the communication unit 101 can receive the input of the desired time slot.

The logged-in user executes an input of designating a desired time slot among all time slots on the user terminal. The logged-in user may designate one time slot as the desired time slot, or may designate two or more continuous time slots as the desired time slots.

When the communication unit 101 receives the input of the desired time slot (S201), the processing unit 102a calculates the evaluation value, namely, the number of vacant slots for each time slot (S202). The processing unit 102a determines whether the evaluation values of all the time slots included in the desired time slot exceed K (S203). In other words, the processing unit 102a determines whether there are more than K vacant slots in all time slots included in the desired time slot.

When the evaluation values in all time slots included in the desired time slot exceed K (S203: Yes), the processing unit 102a determines whether there are one or more charging stations ST that are vacant over the desired time slots (S204). The charging station ST vacant over the desired time slots is referred to as a candidate station, which is intended to mean a candidate for a reservable charging station ST.

When there are one or more charging stations ST vacant over the desired time slots, namely, there are one or more candidate stations (S204: Yes), the processing unit 102a calculates priority of the one or more candidate stations based on the reservation status in a time slot immediately before the desired time slot and a time slot immediately after the desired time slot, and displays a predetermined number of candidate stations with higher priority as the reservable charging stations ST (S205). Thus, in the second embodiment, the processing unit 102a is configured to be able to reserve slots for charging general vehicles in units of charging stations ST.

Various methods can be considered for a method of calculating priority based on the reservation status in the time slot immediately before the desired time slot and the time slot immediately after the desired time slot.

In one example, the processing unit 102a gives the highest priority to a charging station ST for which the time slot immediately before the desired time slot and the time slot immediately after the desired time slot are both reserved, gives the second highest priority to a charging station ST for which only either one of the time slot immediately before the desired time slot or the time slot immediately after the desired time slot is reserved, and gives the lowest priority to a charging station ST for which the time slot immediately before the desired time slot and the time slot immediately after the desired time slot are both vacant. According to such method of calculating priority, it is possible to receive new reservation such that reservations are concentrated on some of the charging stations ST as much as possible.

In another example, the processing unit 102a gives the highest priority to a charging station ST for which the time slot immediately before the desired time slot and the time slot immediately after the desired time slot are both vacant, gives the second highest priority to a charging station ST for which only either one of the time slot immediately before the desired time slot or the time slot immediately after the desired time slot is reserved, and gives the lowest priority to a charging station ST for which the time slot immediately before the desired time slot and the time slot immediately after the desired time slot are both reserved. According to such method for calculating the priority, it is possible to receive new reservation such that reservations are distributed across all charging stations ST.

The logged-in user executes, by the user terminal, an input of selecting a desired charging station ST from among all charging stations ST displayed as reservable charging stations ST. The logged-in user is prohibited from selecting a charging station ST not displayed as a reservable charging station ST. An input of selecting one charging station ST from among the reservable charging stations ST is transmitted from the user terminal to the reservation management device 1 via the communication network 2.

When the communication unit 101 receives the input of selecting a charging station ST (S206), a reservation is established (S207). Specifically, the processing unit 102a operates the reservation information DB 104 and allocates all slots in the desired time slot of the selected charging station ST to the logged-in user. In S207, the operation of the reservation management device 1 ends.

When the evaluation value does not exceed K in any of the time slots in the desired time slots (S203: No), or when no charging station ST that is vacant over the desired time slots (S204: No), the reservation fails (S208), and the operation of the reservation management device 1 ends.

Note that, among the series of operations illustrated in FIG. 11, S101 is an example of a first step. S102, S103, S106, and S201 to S205 are an example of a second step.

As described above, according to the second embodiment, when the vehicle of the user is not an emergency vehicle, the communication unit 101 as a reception unit receives the input of the desired time slot from the user. The processing unit 102a calculates priority for each charging station ST as a charging spot based on the reservation status in the time slot immediately before the desired time slot and the reservation status in the time slot immediately after the desired time slot. Then, the processing unit 102a narrows down a group of reservable slots based on priority.

Therefore, it is possible to receive new reservation such that reservation is concentrated on some of the charging stations ST as much as possible, or receive new reservation such that reservation is distributed across all charging stations ST.

In the second embodiment, the processing unit 102a allows the user of the general vehicle to make reservation only when there is a charging station ST that is vacant over the desired time slots. A method of setting a slot that the user of the general vehicle can charge the vehicle in the desired time slot is not limited thereto.

In one example, when there is a time slot whose evaluation value exceeds K in the desired time slots, the processing unit 102a displays a vacant slot for the time slot whose evaluation value exceeds K so that the user of the general vehicle can make reservation regardless of whether there is a charging station ST that is vacant over the desired time slots. The processing unit 102a may be configured such that the user of the general vehicle can input selection of a desired slot in units of slots, or may be configured such that the user of the general vehicle can input selection of a desired slot in units of charging stations ST.

### (Third Embodiment)

Each of the charging station terminals 40 performs control of the charging station ST based on the terminal control program 400. When the terminal control program 400 of a certain charging station terminal 40 includes software having vulnerability, it may be difficult for the corresponding charging station terminal 40 to execute a proper operation due to attack or falsification exploiting vulnerability.

In a third embodiment, a reservation management device estimates safety of the charging station terminal 40 for each charging station ST. Based on the safety of each charging station terminal 40, the reservation management device differentiates a group of reservable slots for an emergency vehicle from that for a general vehicle.

The reservation management device according to the third embodiment is referred to as a reservation management device 1b. In the third embodiment, matters different from those in the first embodiment will be described, and matters same as those in the first embodiment will be briefly described or description thereof will be omitted.

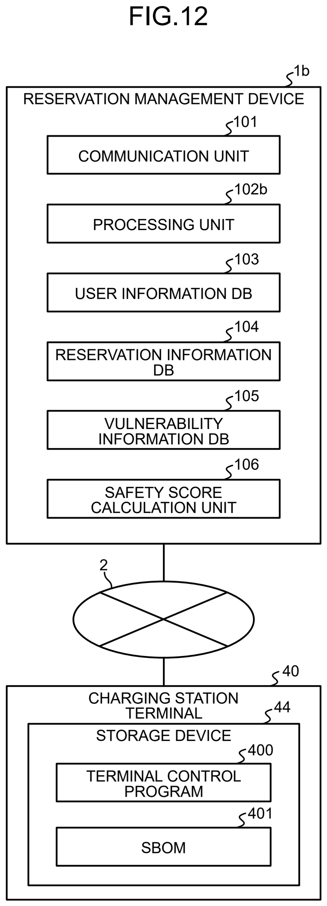

FIG. 12 is a diagram illustrating an example of a functional configuration of the reservation management device 1b according to the third embodiment. In addition to the functional configuration of the reservation management device 1b, the drawing also illustrates the charging station terminal 40 provided in one of the four charging stations ST. Since the charging station terminals 40 provided in the four charging stations ST have a common configuration, the charging station terminals 40 provided in the other three charging stations ST are omitted.

The storage device 44 of the charging station terminal 40 stores a software bill of materials (SBOM) 401 in addition to the terminal control program 400. In the SBOM 401, pieces of shiftware configuring the terminal control program 400 and a dependency relationship between pieces of software configuring the terminal control program 400 are described in accordance with a predetermined format.

The SBOM 401 is an example of a list of software used in the charging station terminal 40. As long as the list of software is represented, in the present embodiment, data in optional format can be used instead of SBOM.

The SBOM 401 is not necessarily stored in the charging station terminal 40. When an update manager that manages update of each charging station terminal 40 is provided outside, the update manager may store the SBOM 401.

The reservation management device 1b functions as the communication unit 101, a processing unit 102b, the user information DB 103, the reservation information DB 104, a vulnerability information database (DB) 105, and a safety score calculation unit 106.

A function of the communication unit 101 is implemented by, for example, the communication interface 13 or the CPU 11. Functions of the processing unit 102b, the user information DB 103, the reservation information DB 104, the vulnerability information DB 105, and the safety score calculation unit 106 are implemented by, for example, the CPU 11 executing the reservation management program 100. Note that some of or all the user information DB 103, the reservation information DB 104, and the vulnerability information DB 105 may be implemented by the CPU 11 based on a program different from the reservation management program 100. Some of or all the user information DB 103, the reservation information DB 104, and the vulnerability information DB 105 may be implemented by an information processing device provided outside the reservation management device 1.

The vulnerability information DB 105 is a database in which a coefficient (or a multiplier) according to vulnerability is recorded for each software having vulnerability.

The safety score calculation unit 106 calculates a safety score of each charging station terminal 40 based on the SBOM 401 of each charging station terminal 40. The safety score is an estimated value representing safety of the charging station terminal 40. Thus, the safety score calculation unit 106 estimates the safety of each charging station terminal 40.

Based on the safety score of each charging station terminal 40, the processing unit 102b differentiates a group of reservable slots for an emergency vehicle from that for a general vehicle. Further details of the processing unit 102b will become apparent in description of the operation.

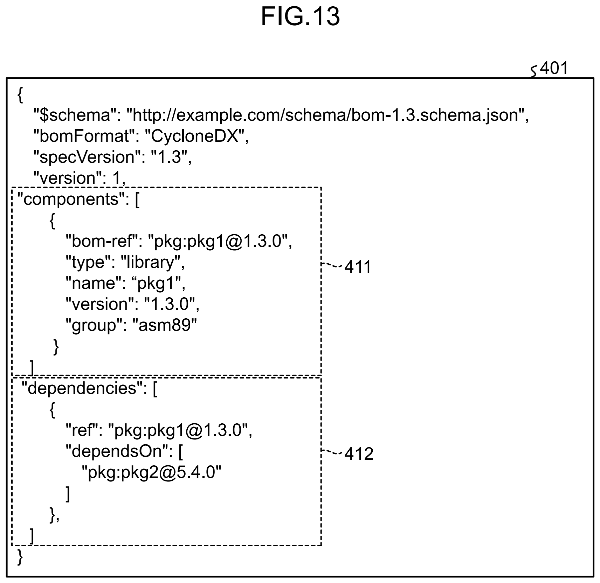

FIG. 13 is a diagram illustrating a specific example of the SBOM 401 according to the third embodiment.

In the example illustrated in FIG. 13, the SBOM 401 includes a description 411 indicating information of software configuring the terminal control program 400. The description 411 indicates that software "pkg1" of version 1.3.0 is used for the terminal control program 400.

The SBOM 401 includes a description 412 indicating software that is depended on by the software "pkg1" described above. From the description 412, it can be read that the software "pkg1" depends on software "pkg2" of version 5.4.0.

Note that contents corresponding to software used in the charging station terminal 40 are described in the SBOM 401. Thus, when used software or a version of the used software is different for each charging station terminal 40, contents of the SBOMs 401 may be different for each charging station terminal 40.

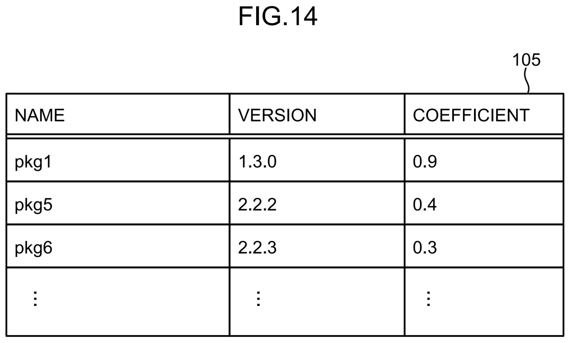

FIG. 14 is a diagram illustrating an example of a configuration of the vulnerability information DB 105 according to the third embodiment.

The vulnerability information DB 105 includes a column in which a name of the software is recorded, a column in which a version of the software is recorded, and a column in which a coefficient is indicated. The coefficient is data used for calculating the safety score and corresponds to the vulnerability of the software indicated by the name and the version. The coefficient is a real number that is larger than 0 and equal to or smaller than 1. The more vulnerable the software is, the smaller coefficient is given to the software. The software from which no vulnerability is found may not be recorded in the vulnerability information DB 105 or may be recorded in the vulnerability information DB 105 with a coefficient of 1.

In the example shown in FIG. 14, the software "pkg1" of version 1.3.0 is given a coefficient of 0.9, software "pkg5" of version 2.2.2 is given a coefficient of 0.4, and software "pkg6" of version 2.2.3 is given a coefficient of 0.3.

A method of generating the vulnerability information DB 105 is not limited to a specific method. An operator or the like of the reservation management device 1b may construct the vulnerability information DB 105, or the operator of the reservation management device 1b may obtain the vulnerability information DB 105 from an external organization.

Next, an operation of the reservation management device 1b will be described.

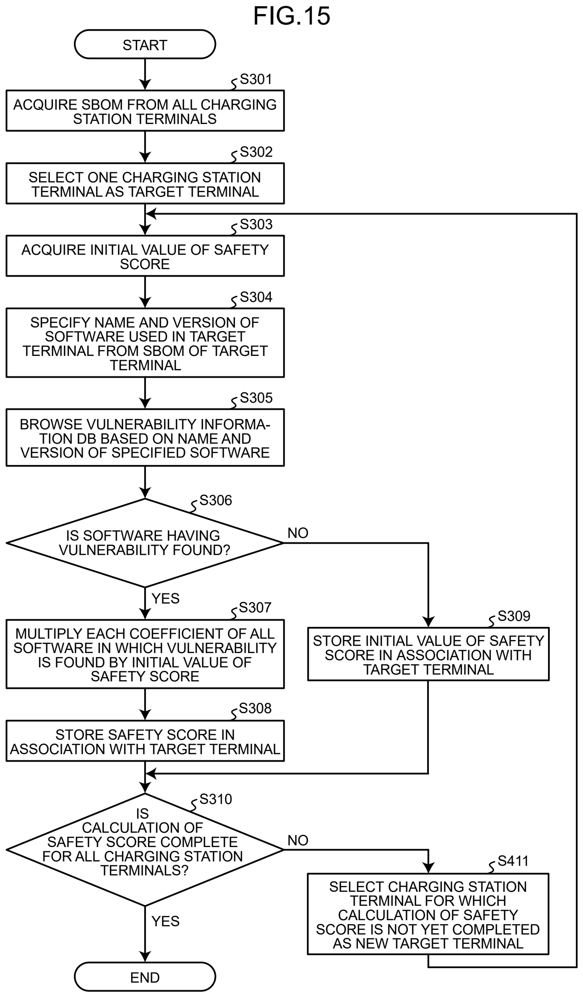

FIG. 15 is a flowchart illustrating an example of an operation of calculating the safety score by the reservation management device 1b according to the third embodiment.

First, the safety score calculation unit 106 acquires the SBOMs 401 from all charging station terminals 40 (S301). When the SBOMs 401 are stored in an information processing device outside the charging station terminals 40, the safety score calculation unit 106 acquires the SBOMs 401 of all the charging station terminals 40 from the information processing device.

Subsequently, the safety score calculation unit 106 sequentially executes loop processing of S303 to S311 for each of the charging station terminals 40. The charging station terminal 40 as an execution target of the loop processing is referred to as a target terminal.

When starting the loop processing, the safety score calculation unit 106 selects one charging station terminal 40 as a target terminal from among all charging station terminals 40 (S302).

Then, the safety score calculation unit 106 acquires an initial value of the safety score (S303). The initial value is a fixed value.

The safety score calculation unit 106 determines a name and a version of the software used in the target terminal from the SBOM 401 of the target terminal (S304). In S304, when software to be depended on is described in the SBOM 401, the safety score calculation unit 106 also recognizes this software to be depended on as software used in the target terminal.

The safety score calculation unit 106 searches the vulnerability information DB 105 based on the name and the version of the determined software (S305). Then, the safety score calculation unit 106 determines whether software having vulnerability is found (S306). When there is a piece of software for which a value less than 1 is given as a coefficient among the determined pieces of software, the safety score calculation unit 106 recognizes that the piece of software has vulnerability.

When software having vulnerability is found (S306: Yes), the safety score calculation unit 106 multiplies the initial value of the safety score by coefficients of all software having vulnerabilities (S307). Then, the safety score calculation unit 106 stores the obtained value as the safety score of the target terminal (S308).

When software having vulnerability is not found (S306: No), the safety score calculation unit 106 stores the initial value of the safety score as the safety score of the target terminal (S309).

After S308 or S309, the safety score calculation unit 106 determines whether safety score calculation is completed for all the charging station terminals 40 (S310). When there is a charging station terminal 40 for which safety score calculation is not completed yet (S310: No), the safety score calculation unit 106 selects the charging station terminal 40 for which safety score calculation is not completed yet as a new target terminal (S311), and executes the loop processing starting from S303 on the new target terminal.

When safety score calculation is completed for all charging station terminals 40 (S310: Yes), the operation of calculating the safety score ends.

Note that, among the series of operations illustrated in FIG. 15, S301 is an example of a third step. S305 to S309 are an example of a fourth step.

According to the example of the SBOM 401 illustrated in FIG. 13 and the example of the vulnerability information DB 105 illustrated in FIG. 14, it can be read that that the software "pkg1" of version 1.3.0 among the software used in the charging station terminal 40 has vulnerability. When "5" is set as the initial value of the safety score, the safety score calculation unit 106 can obtain "4.5" as the safety score of the charging station terminal 40 by multiplying the initial value "5" of the safety score by the coefficient "0.9" of the software "pkg1" of version 1.3.0.

As described above, since a coefficient of less than 1 is set for software having vulnerability, the safety score decreases according to vulnerability by multiplying each coefficient of the software having vulnerability. Therefore, a smaller value is obtained as the safety score for the charging station terminal 40 with lower safety, and a larger value close to the initial value is obtained as the safety score for the charging station terminal 40 with higher safety.

Note that the method of calculating the safety score is not limited to the example described above. For example, the safety score calculation unit 106 may be configured to calculate the safety score of the charging station terminal 40 by a point deduction method in which a value is subtracted for the number of software having vulnerability.

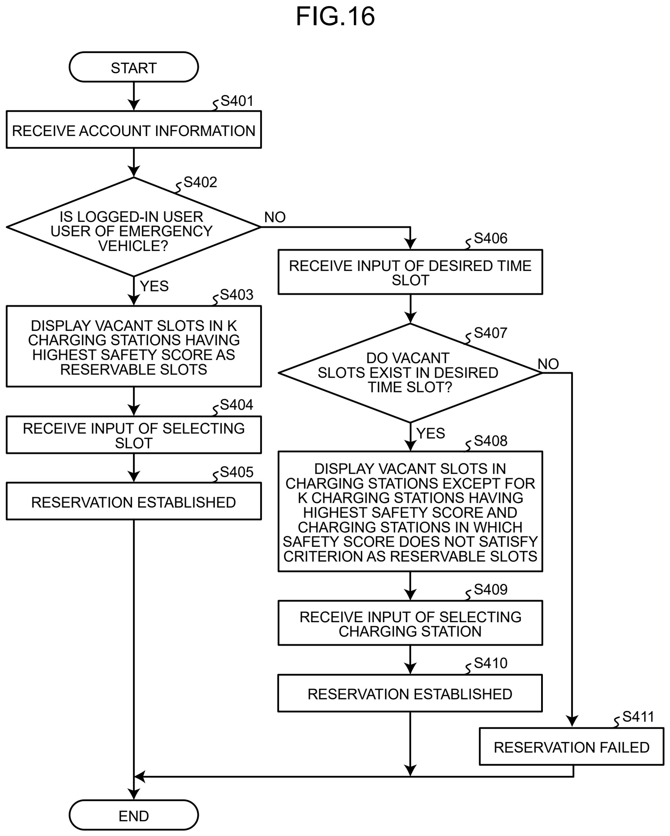

FIG. 16 is a flowchart illustrating an example of an operation of reservation management by the reservation management device 1b according to the third embodiment.

Similarly to the processing of S101 of the first embodiment, the communication unit 101 receives account information (S401). Then, the processing unit 102b determines whether the vehicle of the logged-in user, namely, the vehicle of the user who input the account information is an emergency vehicle, similarly to the processing of S102 of the first embodiment (S402).

When the vehicle of the logged-in user is an emergency vehicle (S402: Yes), the processing unit 102b displays vacant slots in K charging stations ST having highest safety scores as reservable slots (S403). Thus, the processing unit 102b and displays a screen on the user terminal, in which all unreserved slots of the K charging stations ST including the charging station terminals 40 having the highest safety among the charging stations ST1 to ST4 are indicated as reservable slots, all reserved slots of the K charging stations ST including the charging station terminal 40 having the highest safety among the charging stations ST1 to ST4 are indicated as unreservable slots, and indications of slots of the rest of charging stations ST are omitted.

Note that the processing unit 102b may display, as unreservable slots, all slots of charging stations ST other than the K charging stations ST including the charging station terminal 40 having the highest safety among the charging stations ST1 to ST4.

The logged-in user executes, on the user terminal, an input of selecting a desired slot from among all slots displayed as reservable slots. The logged-in user is prohibited from selecting a slot that is not displayed as a reservable slot. An input of selecting a slot from among reservable slots is transmitted from the user terminal to the reservation management device 1b via the communication network 2.

When the communication unit 101 receives the input of selecting a slot (S404), a reservation is established (S405). Specifically, the processing unit 102b operates the reservation information DB 104 and allocates the selected slot indicated by the input to the logged-in user. In S505, the operation of reservation management ends.

When the vehicle of the logged-in user is not an emergency vehicle (S402: No), the communication unit 101 can receive the input of the desired time slot similarly to the processing of S201 in the second embodiment.

When the communication unit 101 receives the input of the desired time slot (S406), the processing unit 102b determines whether there is a vacant slot in the desired time slot (S407).

When a vacant slot exists in the desired time slot (S407: Yes), the processing unit 102b displays, as reservable slots, the vacant slots in the charging stations ST other than the K charging stations ST having highest safety score and the charging stations ST whose safety score does not satisfy the criterion (S408). Accordingly, the processing unit 102b displays a screen on the user terminal, in which all unreserved slots are displayed as reservable slots and all reserved slots are displayed as unreservable slots with respect to all charging stations ST other than, among the charging stations ST1 to ST4, the K charging stations ST including the charging station terminals 40 having the highest safety and the charging stations ST including the charging station terminals 40 whose safety does not satisfy the criterion. For the K charging stations ST including the charging station terminal 40 having the highest safety and the charging station ST including the charging station terminal 40 whose safety does not satisfy the criterion among the charging stations ST1 to ST4, the processing unit 102b may omit indications of the slots thereof or may display the slots thereof as unreservable slots.

Note that the processing unit 102b determines whether the safety satisfies the criterion based on, for example, a comparison between the safety score and a predetermined reference value. When the safety score exceeds the reference value, namely, when the safety score is indicated to be higher than safety corresponding to the reference value, the processing unit 102b determines that the safety satisfies the criterion. When the safety score falls below the reference value, namely, when the safety score is indicated to be lower than safety corresponding to the reference value, the processing unit 102b determines that the safety does not satisfy the criterion. The processing when the safety score is equal to the reference value is freely set. When the safety score is equal to the reference value, the processing unit 102b may determine that the safety satisfies the criterion, or may determine that the safety does not satisfy the criterion.

In the third embodiment, the processing unit 102b is configured to be able to reserve slots for general vehicles in units of charging stations ST. The logged-in user checks the reservable slot, and then executes an input of selecting a desired charging station ST from among all charging stations ST having reservable slots by the user terminal. The logged-in user is prohibited from selecting a charging station ST having no reservable slot. The input of selecting one charging station ST among the charging stations ST having reservable slots is transmitted from the user terminal to the reservation management device 1 via the communication network 2.

When the communication unit 101 receives the input of selecting a charging station ST (S409), a reservation is established (S410). Specifically, the processing unit 102 operates the reservation information DB 104 and allocates all slots in the desired time slot of the selected charging station ST to the logged-in user. In S410, the operation of reservation management ends.

When there is no vacant slot in the desired time slot (S407: Yes), a reservation is failed (S411), and the operation of reservation management ends.

Note that, among the series of operations illustrated in FIG. 16, S401 is an example of a first step. S402, S403, and S406 to S408 are an example of a second step.

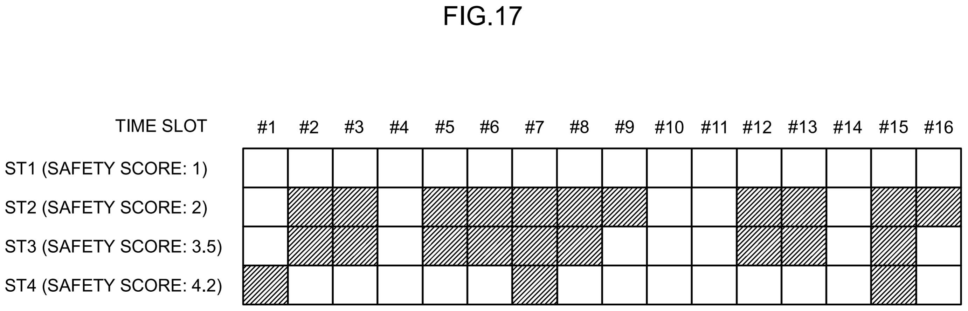

A specific example of a method of displaying reservable slots according to the third embodiment will be described with reference to FIGS. 17 to 20. Note that, in the description with FIGS. 17 to 20, as one example, it is assumed that K is "1", and the safety satisfies the criterion when the safety score exceeds a reference value of "1.5".

FIG. 17 is a view illustrating an example of a reservation status of slots.

In FIG. 17, a reservation status for 64 slots allowing the charging station ST to provide the charging service is illustrated. Rectangles with diagonal hatching indicate slots reserved for emergency vehicle or for general vehicle. Outlined rectangles indicate unreserved slots, namely, vacant slots.

FIG. 17 further illustrates the safety scores of the charging stations ST1 to ST4 (more precisely, the charging station terminals 40 provided in the charging stations ST1 to ST4) calculated by the safety score calculation unit 106. In the example illustrated in the drawing, an initial value of the safety score (namely, a maximum value of the safety score) is "5", the safety score of the charging station ST1 is "1", the safety score of the charging station ST2 is "2", the safety score of the charging station ST3 is "3.5", and the safety score of the charging station ST4 is "4.5". In the example, the safety of the charging station ST1 does not satisfy the criterion, and the safety of each of the charging stations ST2 to ST4 satisfies the criterion.

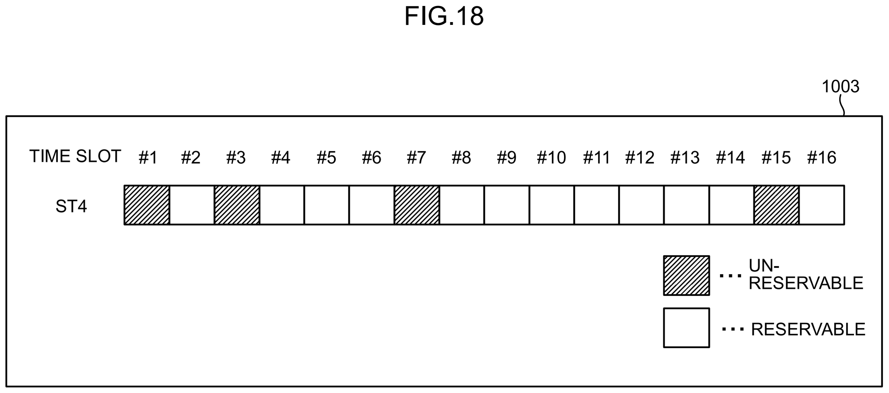

FIG. 18 is a view illustrating an example of a screen displayed to the user of the emergency vehicle in the reservation status illustrated in FIG. 17.

In the example illustrated in FIG. 18, on a screen 1003, vacant slots in the charging station ST4 that is the charging station ST having highest safety score among the charging stations ST1 to ST4 are displayed as reservable slots. Reserved slots in the charging station ST4 are displayed as unreservable slots. In the example, the slots in the charging stations ST2 to ST4 are not displayed.

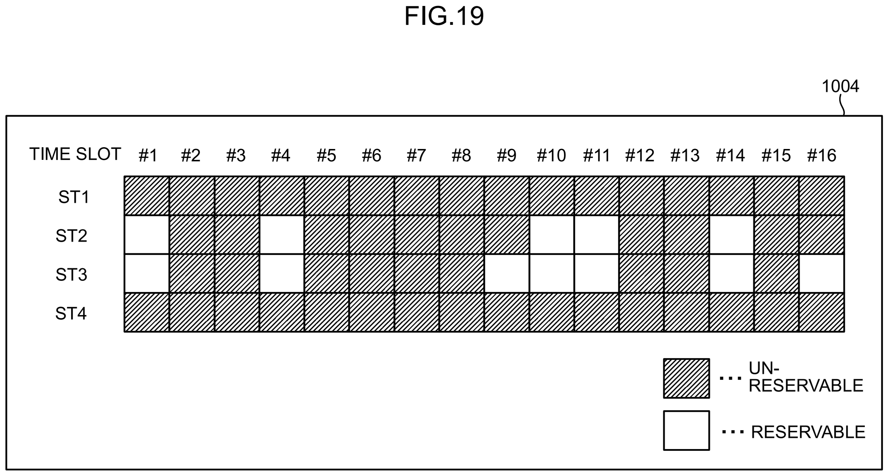

FIG. 19 is a view illustrating an example of a screen displayed to the user of the general vehicle in the reservation status illustrated in FIG. 17. Here, as one example, a screen 1004 when all time slots are selected as the desired time slot is illustrated.

In the example shown in FIG. 19, on the screen 1004, slots of the charging station ST4 that is the charging station ST having highest safety score among the charging stations ST1 to ST4 are all displayed as unreservable slots regardless of whether or not the slots are reserved. Slots of the charging station ST whose safety does not satisfy the criterion among the charging stations ST1 to ST4, namely, slots of the charging station ST1 whose safety score is equal to or less than the reference value of 1.5 are all displayed as unreservable slots. For the charging stations ST2 and ST3 that are the rest of charging stations ST, unreserved slots are displayed as available slots and reserved slots are displayed as unavailable slots.

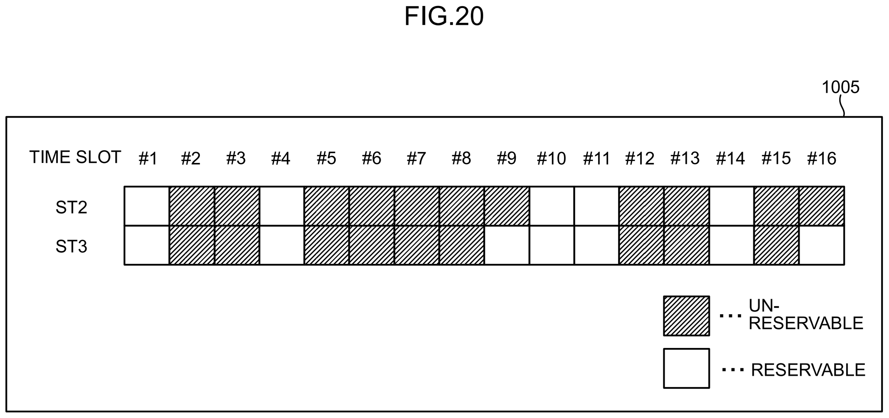

FIG. 20 is a view illustrating another example of a screen displayed to the user of the general vehicle in the reservation status illustrated in FIG. 17. Here, as one example, a screen 1005 when all time slots are selected as the desired time slot is illustrated.

In the example illustrated in FIG. 20, on the screen 1005, for the charging stations ST2 and ST3, unreserved slots are displayed as available slots, and reserved slots are displayed as unavailable slots. Slots of the charging station ST4 that is the charging station ST having the highest safety score among the charging stations ST1 to ST4 are omitted and cannot be selected by the user. Similarly, slots of the charging station ST1 whose safety score is equal to or less than the reference value of 1.5 are also omitted and cannot be selected by the user.

As described above, according to the third embodiment, vacant slots of the K charging stations ST having the highest safety are displayed as reservable slots for the user of the emergency vehicle, and are displayed as unreservable slots or are not displayed for the user of the general vehicle. Therefore, the K charging stations ST having the highest safety can be dedicated for emergency vehicles. As a result, the emergency vehicle can charge in any time slot.

Note that, in the above description, the vacant slots of the K charging stations ST having the highest safety among all charging stations ST are displayed to the user of the emergency vehicle. A method of setting slots to be displayed to the user of the emergency vehicle or the like is not limited thereto.

In one example, the processing unit 102b determines a vacant charging station ST for each time slot. Then, in each time slot, the processing unit 102b displays vacant slots of K charging stations ST with higher safety among the vacant charging stations ST as reservable slots for the user of the emergency vehicle. For the user of the general vehicle, in each time slot in the desired time slot, vacant slots of the charging stations ST other than the K charging stations ST with higher safety and the charging stations ST whose safety does not satisfy the criterion among the vacant charging stations ST are displayed as reservable slots.

In another example, the processing unit 102b displays vacant slots of M charging stations ST having the highest safety among all charging stations ST as reservable slots for the user of the emergency vehicle. Note that M is larger than K.

Thus, according to the third embodiment, the processing unit 102b displays at least the vacant slots of the K charging stations ST having the highest safety as reservable slots for the user of the emergency vehicle. The processing unit 102b may display the vacant slots of K or more charging stations ST having the highest safety as reservable slots for the user of the emergency vehicle. Vacant slots of the charging stations ST different from the K charging stations ST having the highest safety are displayed as reservable slots for the user of the general vehicle.

Therefore, at least the K charging stations ST having the highest safety can be dedicated for emergency vehicles, and thus the emergency vehicle can charge in any time slot.

In the description of the third embodiment, the processing unit 102b sets the charging stations ST whose safety does not satisfy the threshold as unreservable for the user of the general vehicle. When there is a charging station ST whose the safety does not satisfy the threshold among the K charging stations ST having the highest safety, the processing unit 102b may set such a charging station ST whose safety does not satisfy the threshold to be unreservable also for the user of the emergency vehicle.

When the safety of the charging station terminal 40 is low, there is a possibility that the charging station terminal 40 performs an unauthorized operation due to attack or falsification exploiting vulnerability. Examples of the unauthorized operation include overcharging and takeover of a control system of an electric vehicle.

In the third embodiment, the processing unit 102b sets the charging stations ST whose safety does not satisfy the criterion to be unreservable. Accordingly, it is possible to prevent the user or the electric vehicle to be charged from being exposed to the unauthorized operation.

Note that the processing unit 102b may not necessarily set the charging stations ST whose safety does not satisfy the criterion to be unreservable.

Moreover, only when there is a charging station ST that is vacant over the desired time slots, the processing unit 102b may display the slots of the charging stations ST vacant over the desired time slots as reservable slots to the user of the general vehicle. When there are one or more charging stations ST that are vacant over the desired time slot, the processing unit 102b may calculate priority of the one or more charging stations ST vacant over the desired time slots similarly to the processing unit 102a of the second embodiment, and display a predetermined number of charging stations ST with higher priority as the reservable charging stations ST.

The processing unit 102b may display reservable slots to the user of the emergency vehicle such that the user can read the estimated safety. For example, the processing unit 102b may display reservable slots in colors corresponding to the safety score in units of charging stations ST by color-coding.

The processing unit 102b may also display the reservable slot to the user of the general vehicle such that the user can read the estimated safety.

The processing unit 102b may be configured such that the user of the general vehicle can input selection of the desired slot in units of slots.

As described in the first embodiment, the first to third modifications of the first embodiment, the second embodiment, and the third embodiment, according to the embodiment, the processing units 102, 102a, and 102b set a group of slots reservable by the user from among plural slots, which are defined by the charging spot and the time slot and allow the charging station ST to provide the charging service, by different methods depending on whether the vehicle of the user is an emergency vehicle. Then, the processing units 102, 102a, and 102b display the set group of slots such that the user can make reservation.

Therefore, since it is possible to provide slots that allow the user of the emergency vehicle to make reservation with higher priority than the user of the general vehicle, the emergency vehicle can charge in any time slot.

Note that the reservation management program 100, that is a computer program for implementing the functions of the reservation management devices 1, 1a, and 1b of the first embodiment, the first to third modifications of the first embodiment, the second embodiment, and the third embodiment, is provided by being incorporated in advance in the storage device 14 of the reservation management devices 1, 1a, and 1b. The reservation management program 100 executed by the reservation management devices 1, 1a, and 1b may be provided by being recorded in a computer-readable recording medium such as a compact disc-read only memory (CD-ROM), a flexible disc (FD), a CD-recordable (CD-R), a digital versatile disk (DVD), a universal serial bus (USB) memory, or a secure digital (SD) card as a file in an installable or executable format.

The reservation management program 100 may be stored in a computer connected to a network such as the Internet and be provided by being downloaded via the network. The reservation management program 100 may be provided or distributed via a network such as the Internet.

Some of or all the functions of the reservation management devices 1, 1a, and 1b may be implemented by a field-programmable gate array (FPGA), an application specific integrated circuit (ASIC), or the like.

Although some embodiments of the present disclosure have been described, the embodiments have been presented by way of example and are not intended to limit the scope of the invention. The embodiments can be implemented in various other aspects, and various omissions, substitutions, and changes can be made without departing from the gist of the invention. The accompanying claims and their equivalents are intended to cover such embodiments or modifications as would fall within the scope and spirit of the invention.

### EXPLANATIONS OF LETTERS OR NUMERALS

1, 1a, 1b reservation management device
2 communication network
3 smartphone
11, 41 CPU
12, 42 RAM
13, 43 communication interface
14, 44 storage device
15, 47 bus
40, 40-1, 40-2, 40-3, 40-4 charging station terminal
45 IO interface
46 HMI
50, 50-1, 50-2, 50-3, 50-4, 50-5, 50-5, 50-6, 50-7 charger
100 reservation management program
101 communication unit
102, 102a, 102b processing unit
103 user information DB
104 reservation information DB
105 vulnerability information DB
106 safety score calculation unit
400 terminal control program
411, 412 description
1001, 1002, 1003, 1004, 1005 screen
R region
ST, ST1, ST2, ST3, ST4 charging station

## Claims

1. A reservation management method comprising:
a first step of receiving information about a user; and
a second step of
determining, based on the received information, whether an electric vehicle of the user is an emergency vehicle,
setting a group of first slots from among multiple slots by one of methods, the multiple slots each being defined by a charging spot and a time slot and each allowing a charging station to provide a charging service, the methods being different depending on whether or not the electric vehicle of the user is an emergency vehicle, and
displaying the group of first slots to be reservable by the user.

2. The reservation management method according to claim 1, wherein the second step includes
setting vacant slots for all time slots as first slots when the electric vehicle of the user is an emergency vehicle, and,
when the electric vehicle of the user is not an emergency vehicle,
calculating an evaluation value related to the number of vacant slots for each time slot,
setting, as first slots, vacant slots for time slots each of whose evaluation value exceeds a threshold, and
not setting, as first slots, vacant slots for time slots each of whose evaluation value is less than the threshold.

3. The reservation management method according to claim 2, wherein the evaluation value for each time slot is the number of vacant slots for each time slot.

4. The reservation management method according to claim 2, wherein the calculating the evaluation value for each time slot includes, when a slot in a time slot immediately preceding the time slot has been reserved, reducing the evaluation value for the slot as compared to when a slot in the immediately preceding time slot has been unreserved.

5. The reservation management method according to claim 1, further comprising:
a third step of acquiring a list of software used in a terminal device of a charging station for each charging spot; and
a fourth step of estimating safety for each charging spot based on the list of software acquired for each charging spot, wherein
the second step further includes
setting, as first slots, vacant slots of at least a first number of charging spots whose safety is the highest when the electric vehicle of the user is an emergency vehicle, and,
when the electric vehicle of the user is not an emergency vehicle, setting, as first slots, vacant slots of charging spots different from the first number of charging spots whose safety is the highest.

6. The reservation management method according to claim 5, wherein the second step further includes, when the electric vehicle of the user is not an emergency vehicle, setting, as first slots, vacant slots of charging spots other than the first number of charging spots and charging spots whose safety is less than a reference value.

7. The reservation management method according to claim 2, 5, or 6, wherein the second step further includes, when the electric vehicle of the user is not an emergency vehicle,
receiving an input of a desired time slot from the user, and
calculating priority of each charging spot based on a reservation status in a time slot immediately before the desired time slot and a reservation status in a time slot immediately after the desired time slot, and narrowing down the group of first slots based on the priority.

8. A reservation management device comprising:
a reception unit that receives information about a user; and
a processing unit that
determines, based on the received information, whether an electric vehicle of the user is an emergency vehicle,
sets a group of first slots from among multiple slots by one of methods, the multiple slots each being defined by a charging spot and a time slot and each allowing a charging station to provide a charging service, the methods being different depending on whether or not the electric vehicle of the user is an emergency vehicle, and
displays the group of first slots to be reservable by the user.

9. A reservation management program causing a computer to execute:
a first step of receiving information about a user; and
a second step of
determining, based on the received information, whether an electric vehicle of the user is an emergency vehicle,
setting a group of first slots from among multiple slots by one of methods, the multiple slots each being defined by a charging spot and a time slot and each allowing a charging station to provide a charging service, the methods being different depending on whether or not the electric vehicle of the user is an emergency vehicle, and
displaying the group of first slots to be reservable by the user.
